# EUROPÄISCHE PATENTSCHRIFT

(11) **EP 3 672 519 B1**
(45) Veröffentlichungstag und Bekanntmachung des Hinweises auf die Patenterteilung: **04.10.2023**
(21) Anmeldenummer: 18773331.6
(22) Anmeldetag: 24.08.2018
(51) Int. Cl.: A61C 9/00

(54) **KONFEKTIONIERTER ZAHNMEDIZINISCHER ABFORMLÖFFEL IM BAUKASTENSYSTEM**
PREFABRICATED DENTAL IMPRESSION TRAY IN A MODULAR SYSTEM
PORTE-EMPREINTE DE DENTISTERIE CONFECTIONNÉ DANS UN SYSTÈME MODULAIRE

(30) Priorität: 24.08.2017 DE 102017119448
(43) Veröffentlichungstag der Anmeldung: 01.07.2020
(73) Patentinhaber: Linzen, Sebastian, 41239 Mönchengladbach (DE)
(72) Erfinder: Linzen, Sebastian, 41239 Mönchengladbach (DE)
(74) Vertreter: Bonsmann, Joachim Bernhard
(86) Internationale Anmeldenummer: PCT/DE2018/100736
(87) Internationale Veröffentlichungsnummer: WO 2019/037821

(56) Entgegenhaltungen:
- EP-A2- 0 272 249
- CN-B- 104 840 266
- JP-A- 2001 112 787
- US-A- 4 459 107
- US-A- 5 393 227
- US-A1- 2006 269 899

## Beschreibung

Viele Abformungen in der Zahnarztpraxis werden mit Hilfe sogenannter konfektionierter Löffel genommen. Diese bestehen meist aus Metall, Hartkunststoff oder Silikon.

Diese Löffel weisen einige negative Aspekte auf, z.B. eine Verletzungsgefahr des Patienten beim Abformvorgang. Zudem muss der Behandler stets eine Vielzahl unterschiedlichster Löffel in der Praxis vorhalten, um auf die beim Patienten individuell vorliegende Situation bestmöglich eingehen zu können.

Zunächst seien die Vielzahl benötigter unterschiedlicher Löffel(-formen) betrachtet; konfektionierte Löffel werden insbesondere benötigt für:
- vollbezahnte Kiefer,
- teilbezahnte (partiell bezahnte) Kiefer,
- zahnlose Kiefer und
- Kinderkiefer.

Hinzu kommen noch Varianten, bei denen man nur "halbe Löffel" / sog. "Teillöffel" benutzt, die nur für einen bestimmten Bereich des Zahnbogens benötigt werden (wenn der restliche Zahnbogen bei Erstellung des Zahnersatzes nicht vonnöten ist). Bei dieser Variante gibt es auch wiederum Differenzierungen z.B. für den Frontzahnbereich, den Seitenzahnbereich rechts, den Seitenzahnbereich links, etc.

Alle diese Löffel werden im Durchschnitt für jede Variante üblicherweise in fünf unterschiedlichen Größen je Kiefer (Oberkiefer und Unterkiefer) vorgehalten.

Zudem reicht es in der Regel nicht aus, wenn der Behandler von jeder Variante nur einen Löffel vorrätig hält, denn es ist durchaus möglich, dass mehrere Patienten an einem Tag bei Abformungen denselben Löffel (sprich Form und Größe) benötigen, bzw. ein eigentlich schon wieder benötigter Löffel noch sterilisiert werden muss und daher nicht verfügbar ist.

D.h. im Ergebnis, dass der Behandler eine Vielzahl von Löffeln bevorraten muss. Hält er zu wenig Löffel vorrätig oder steht ein bestimmter, eigentlich benötigter Löffel aktuell nicht zur Verfügung, so kann der Patient entweder nicht behandelt werden, oder es muss hilfsweise ein nicht ganz optimal passender Löffel verwendet werden, was unter Komfortaspekten für den Patienten und auch für die spätere Arbeit des zahntechnischen Labors in der Regel von Nachteil ist.

Zudem müssen Löffel in regelmäßigen Abständen nachbestellt werden. Dafür gibt es diverse Gründe: Verschleiß, Verlust (da das zahntechnische Labor diese nicht korrekt zurückgeschickt hat), etc.

Der Durchschnittspreis für einen konfektionierten Löffel beträgt gegenwärtig ca. EUR 7,--. In einer üblichen Zahnarztpraxis werden ca. 300 Löffel vorgehalten und in einer beispielhaft ausgewählten Praxis mussten ca. 80 Löffel pro Jahr nachbestellt werden.

Ferner gestaltet sich die Reinigung und Sterilisation der benutzten Abformlöffel zeit- und kostenintensiv: Zumeist werden die Löffel vor der Abformung mit speziellen Adhäsiven versehen, so dass ein noch besserer Haftverbund zwischen Löffelbasis und Abformmaterial hergestellt wird. Allerdings sind diese Adhäsive vor dem Sterilisieren zu entfernen. Dazu wird relativ viel Arbeitszeit und ggf. ein relativ teures Reinigungsmittel benötigt, um die Rückstände zu entfernen. Werden diese nicht adäquat entfernt, kann es zu Ausfällen und Reparaturkosten beim Sterilisationsgerät bzw. Thermodesinfektor kommen, da es zu einer Verstopfung der Düsen kommen kann.

Konfektionierte Löffel nehmen zudem viel Platz im Sterilisator oder Thermodesinfektor ein, sodass man evtl. mehrere Durchgänge benötigt, um alle zahnmedizinischen Materialien und Instrumente korrekt zu säubern, was die Praxisabläufe verzögert und kompliziert.

Außerdem nehmen die Löffel in den Praxisräumen verhältnismäßig viel Stauraum bzw. Lagerplatz in Anspruch. Typischerweise benötigen die Löffel eine große Schublade pro Behandlungszimmer und zusätzlichen Patz im Sterilisationsraum.

Alles in Allem sind konfektionierte Löffel für den Behandler hinsichtlich verschiedener Aspekte ausgesprochen arbeits- und kostenintensiv, wobei sich diese "Gemeinkosten" in der Regel nicht auf die individuelle Behandlung umlegen lassen.

US 4 459 107 A und US 5 393 227 A offenbaren Abformlöffel aus Kunststoff respektive aus thermoplastischem Styrol-Harz.

Die Aufgabe der vorliegenden Erfindung besteht darin, Möglichkeiten zu schaffen, die Anzahl an vorzuhaltenden Löffeln signifikant zu reduzieren und gleichzeitig den konfektionierten Löffel - vor der eigentlichen Benutzung - individueller an die Patientensituation anpassen zu können.

Die Lösung der vorgenannten Aufgabe erfolgt mittels eines zahnmedizinischen Abformlöffels mit den Merkmalen des Patentanspruchs 1, mittels eines Baukastensystems nach Anspruch 6, mittels einer Komponente für einen derartigen Abformlöffel gemäß Anspruch 11 sowie mittels eines Verfahrens mit den Merkmalen des Patentanspruchs 12.

Vorteilhafte Ausgestaltungen der Erfindung sind in den abhängigen Patentansprüchen erläutert.

Erfindungsgemäß ist der Abformlöffel in einem Baukastensystem aus mehreren miteinander verbindbaren Teilen oder Komponenten zusammensetzbar und damit individuell an die Patientenkiefersituation anpassbar.

Die individuelle Anpassbarkeit durch Zusammensetzung aus einem Baukastensystem soll besagen, dass ein Behandler in Kenntnis des individuellen Patientenkiefers, an dem eine Abformung vorgenommen werden soll, bestimmte Komponenten auswählen und zusammensetzen kann, und zwar in aller Regel extrakorporal, wobei der entsprechend zusammengesetzte Löffel dann letztlich für die gewünschten Abformungen eingesetzt werden kann.

Mit einem derartigen Baukastensystem kann die Anzahl der vorzuhaltenden Abformlöffel signifikant reduziert und trotzdem eine optimale Anpassung an den Patientenkiefer erzielt werden, die ggf. sogar feinstufiger und damit besser als bei einem System mit vorgegebenen "Volllöffeln" sein kann.

Bevorzugt weist der Abformlöffel einen Basislöffel auf, der sowohl für den Unterkiefer als auch für den Oberkiefer gleichermaßen einsetzbar ist, und der dann jeweils durch verbindbare Zusatzteile ergänzt und/oder angepasst werden kann.

Einen derartigen Universal-Löffel kann man - in Anlehnung an den Sprachgebrauch u.a. im Modebereich - auch als "Unisex-Löffel" bezeichnen, wenngleich es selbstverständlich nicht um einen geschlechtsspezifischen Unterschied geht.

Bei der Gestaltung eines derartigen Universal- oder Unisex-Löffels sowohl für den Oberkiefer (OK) als auch für den Unterkiefer (UK) sind die Gemeinsamkeiten und Unterschiede der bisherigen Oberkiefer- und Unterkieferlöffel zu berücksichtigen:
Bei einem Unterkieferlöffel ist der Zungenraum (Innenraum beim Löffel) frei, wohingegen bei einem Oberkieferlöffel eine Art "Gaumendach" vorzufinden ist.
Diese Tatsache hindert den Zahnmediziner bisher daran, einen Unterkiefer mit einem Oberkieferlöffel abzuformen oder umgekehrt.

Die äußeren Ränder (sprich: bukkal) unterscheiden sich dagegen nur marginal, so dass hier für Ober- und Unterkiefer ein geometrischer Mittelwert verwendet werden kann.

Die genannten Unterschiede können erfindungsgemäß durch unterschiedliche Zusatzelemente berücksichtigt werden, die mit einem einheitlichen Basiselement verbunden werden können.

Die Erfindung ist allerdings nicht prinzipiell auf ein Baukastensystem mit einem Universal-Basislöffel für Ober- und Unterkiefer beschränkt.

Der Baukasten könnte in einer alternativen Ausführungsform (nachfolgend nicht näher dargestellt) auch von Vornherein unterschiedliche Basiselemente für Ober- und Unterkiefer umfassen, die dann z.B. durch verschiedene Verlängerungselemente baukastenartig ergänzt werden.

In einer bevorzugten Ausführungsform kann der zahnmedizinische Abformlöffel bezüglich aller oder einzelner Komponenten im Wesentlichen aus einem thermoplastischen Material hergestellt sein, das im erwärmten Zustand eine Anformung des Abformlöffels im Mund eines Patienten ermöglicht.

Nähere Einzelheiten zu derartigen thermoplastischen Löffeln sind in der - gegenwärtig noch unveröffentlichten - PCT-Anmeldung PCT/DE2018/100517, die auf den Anmelder der vorliegenden PCT-Anmeldung zurückgeht und die bei dem Deutschen Patent- und Markenamt als Anmeldeamt am 28. Mai 2018 eingereicht wurde, beschrieben. Der Inhalt dieser Anmeldung soll durch Bezugnahme in diese Anmeldung mit aufgenommen werden. Für die vorliegende Offenbarung besonders wesentlich erscheinende Aspekte des Abformlöffels aus thermoplastischem Material gemäß o.g. PCT-Anmeldung werden nachfolgend kurz beschrieben; hinsichtlich der Details wird auf die Ausführungen in der genannten Anmeldung verwiesen:
In der jüngeren Vergangenheit wurden zahnmedizinische Materialien auf der Basis von niedrigschmelzenden thermoplastischen Kunststoffen entwickelt. Diese Materialen erlauben für einen begrenzten Zeitraum eine Umformung des Thermoplasts im Mund des Patienten, in etwa vergleichbar einer Knetmasse. Das thermoplastische Material kann dabei im Wasserbad oder mittels anderer Wärmequellen (Dampf, Mikrowelle, etc.) auf relativ hohe Temperaturen zwischen 70° und 100° C erhitzt werden, wobei dann in der Praxis die Oberflächentemperaturen des Materials im Mund des Patienten im verformbaren Zustand nicht mehr als typischerweise 38°C (akzeptabel ist ein Bereich zwischen 35°C und 41°C) erreichen und das Material dann maximal einige Minuten lang verformbar ist.

Der vorbeschriebene Plastifizierungsvorgang ist grundsätzlich reversibel, d.h., das Material kann mehrfach erwärmt und im erwärmten Zustand verformt werden. Im erkalteten Zustand ist das Material dimensionsstabil und für zahnmedizinische Abdrücke grundsätzlich sehr gut geeignet.

Allerdings war es im Stand der Technik nicht bekannt, wie dieses Material in einfacher und praktikabler Weise direkt für zahnmedizinische Feinabformungen eingesetzt werden kann. Das Hauptproblem besteht darin, dass bei der Anformung des Thermoplasts an den Patientenkiefer üblicherweise nicht gewährleistet werden konnte, dass zwischen Kiefer und Abformlöffel ein Mindestabstand für das Feinabformmaterial eingehalten wird.

In diesem Zusammenhang wird in der o.g. PCT-Anmeldung ein individuell anpassbarer Abformlöffel für die zahnmedizinische Feinabformung vorgeschlagen, wobei der Abformlöffel im Wesentlichen aus einem thermoplastischen Kunststoff gebildet ist, der im erwärmten Zustand eine Anformung im Mund des Patienten ermöglicht, und der im erkalteten Zustand formstabil ist. Dieser Abformlöffel soll wenigstens in Teilbereichen, in denen eine Feinabformung erfolgen soll, eine Abstandsschicht mit einer vorgegebenen Stärke aufweisen, wobei die Abstandsschicht nach dem Anformungsvorgang entfernbar ist.

Die Abstandsschicht - beispielsweise eine Folie mit einer vorgegebenen Dicke - bildet damit eine Art Platzhalter für das Material der Feinabformung und gewährleistet somit auch bei Anliegen des Abformlöffels (mit der Abstandsschicht) an den abzuformenden Strukturen eine definierte Mindestschichtdicke für das Feinabformmaterial nach dem wenigstens teilweisen Entfernen der Abstandsschicht.

Um eine reproduzierbare Lage des Abformlöffels beim Feinabformen auch ohne die stützende Wirkung der dann zumindest teilweise entfernten Abstandsschicht zu gewährleisten, kann in vorteilhafter Ausgestaltung gemäß der o.g. PCT-Anmeldung vorgesehen sein, dass die Abstandsschicht zur Ausbildung ein oder mehrerer sog. Stopps wenigstens eine, vorzugsweise mehrere, Ausnehmungen aufweist, durch die der thermoplastische Kunststoff des Abformlöffels direkt (oder näher an) an die abzuformenden Zahn- oder Kieferstrukturen gelangen kann. Durch diese Ausnehmungen kann der thermoplastische Kunststoff somit beim Anformvorgang hindurchtreten und so (nach dem Erkalten) fixierende Anschläge oder Stopps bilden, die auch nach Entfernen der Abstandsschicht eine reproduzierbare Lage des Abformlöffels gewährleisten, so dass der durch die Abstandschicht gewonnene Freiraum gleichmäßig mit einer vorgegebenen Mindeststärke zur Verfügung steht. Die Stopps können sich beim Anformen durch das Eintreten des thermoplastischen Materials in die Ausnehmungen in der Abstandsschicht ausbilden, oder die Stopps können bereits am Abformlöffel vorausgebildet sein und mit den Ausnehmungen in der Abstandsschicht korrespondieren.

Gemäß der o.g. PCT-Anmeldung kann die Abstandsschicht im unangepassten Zustand des Abformlöffels diesen seitlich überragen. Durch dieses seitliche Überragen kann gewährleistet werden, dass beim Anformen des thermoplastischen Kunststoffes der Kunststoff nicht über den Rand der Abstandsschicht hinwegquillt. Gleichzeitig kann sich die Abstandsschicht im Rahmen des erfindungsgemäß vorgeschlagenen Baukastensystems damit auch wenigstens teilweise über ein weiteres angesetztes Teil des Baukastensystems erstrecken, so dass dieses keine "eigene" Abstandsschicht benötigen würde, wenngleich es auch möglich ist, dass die Teile des Baukastensystems jeweils ihre "eigene" Abstandsschicht aufweisen.

Dieses vorstehend skizzierte Konzept aus der genannten PCT-Anmeldung lässt sich nunmehr vortrefflich mit dem erfindungsgemäßen Baukastensystem kombinieren, wodurch eine optimale Anpassung des Abformlöffels an den Patientenkiefer mit einem Minimum vorzuhaltender unterschiedlicher Komponenten erzielt werden kann.

Zwar erlaubt auch schon die thermoplastische Verformbarkeit eine Anpassung an den Patientenkiefer. Dieser Verformbarkeit sind aber Grenzen gesetzt, insbesondere, wenn das Material hierzu stärker gedehnt werden muss, da dabei die Gefahr des "Verdrückens" bzw. der Bildung von Rissen oder Löchern besteht. Durch das erfindungsgemäße Baukastensysteme können stattdessen Zusatzteile vor der Anformung im Patientenmund angesteckt oder anderweitig verbunden werden, so dass nur kleinere Verformungen erforderlich sind.

Dadurch kann dann die Materialstärke des thermoplastischen Materials insgesamt minimiert werden. Dies ist - abgesehen von einem geringeren Materialeinsatz - vor allem deswegen vorteilhaft, weil ein dünnerer Löffel schneller im Wasserbad - oder mittels anderer Wärmequellen wie Dampf oder Mikrowelle - "durcherwärmt" werden kann, was das Handling erleichtert. Ferner ist ein dünnerer Abformlöffel leichter verformbar und auch angenehmer für den Patienten.

Mit der Kombination des Löffels gemäß der o.g. PCT-Anmeldung und dem hier offenbarten Baukastensystem ist es somit grundsätzlich möglich, alle bisher in der Zahnarztpraxis bereitzuhaltenden sowie auch im Labor hergestellte individuelle Löffel (für Abdrücke teilbezahnter Kiefer) und Funktionslöffel (für Abdrücke bei zahnlosen Kiefern) durch nur wenige Komponenten zu ersetzen. Dadurch, dass individuelle bzw. Funktionslöffel nicht mehr im Labor angefertigt werden müssen, sondern direkt am Stuhl ("chairside") hergestellt werden können, kann der Behandler Patientensitzungen und Laborwege einsparen.

In einer bevorzugten Ausführungsform weisen die einzelnen Komponenten des Baukastensystems wenigstens ein Verbindungsmittel zur selektiven Verbindung mit wenigstens einer anderen Komponente auf. Ein derartiges Verbindungsmittel kann beispielsweise als Nut- und Federverbindung oder als eine andere lösbare kraft- und/oder formschlüssige Verbindung ausgebildet sein.

Neben der vorstehend erwähnten Nut- und Federverbindung sind auch eine Vielzahl anderer Verbindungsprinzipien denkbar, so z.B. Stifte (ggf. auch aus einem anderen Material) mit entsprechenden Ausnehmungen als Gegenstücken, elastische Rastnasen, die clipsartig über entsprechende Rastwulste rasten, magnetische Verbindungen, Klettverbindungen, Verbindungen mittels eines - vorzugsweise zumindest in der Konfigurationsphase wieder lösbaren - Adhäsivs, die Verwendung einer sämtliche Elemente umgreifenden elastischen Klammer, etc.

Durch das Verbindungsmittel werden die einzelnen Komponenten gegeneinander fixiert. Dabei muss die Fixierung im Falle der Verwendung eines thermoplastischen Materials nicht notwendigerweise besonders fest sein, da durch die Erwärmung/Plastifizierung und anschließende Anformung des Abformlöffels die Komponenten in der Regel innig miteinander verbunden werden.

In einer bevorzugten Ausführungsform weist das Baukastensystem wenigstens folgende Komponenten auf:
- wenigstens ein sowohl für Oberkiefer- als auch Unterkieferabdrücke geeignetes Löffelbasiselement in ein oder mehreren Größen;
- wenigstens ein mit dem Löffelbasiselement verbindbares Oberkiefer-Gaumenelement, jeweils angepasst an die Größe oder die mehreren Größen des Löffelbasiselements und/oder in einer Variante oder in mehreren Varianten hinsichtlich der Geometrie der Auswölbung des Gaumendachs; und
- wenigstens ein mit dem Löffelbasiselement verbindbares Unterkiefer-Lingualelement, jeweils angepasst an die Größe oder die mehreren Größen des Löffelbasiselements.

Dies entspricht dem vorstehend schon beschriebenen "Universal-" oder "Unisex-"-Löffel. Dieser Löffel kann optional je nach Bedarf durch Verlängerungselemente wie folgt ergänzt werden:
- wenigstens ein vestibuläres/bukkales Verlängerungselement, jeweils angepasst an die Größe oder die mehreren Größen des Löffelbasiselements; und/oder
- wenigstens ein linguales Verlängerungselement, jeweils angepasst an die Größe oder die mehreren Größen des Unterkiefer-Lingualelements.

Dabei können die Verlängerungselemente zur Erzielung größerer Verlängerungen dahingehend ausgebildet sein, auch mehrfach hintereinander gesteckt eingesetzt zu werden.

Die *lingualen* Verlängerungselemente sind zur Verlängerung des Unterkiefer-Lingualelements ausgebildet und werden dort unterseitig an den Innenbogen befestigt, so dass sich das so verlängerte Unterkiefer-Lingualelement weiter zur unteren Mundhöhlenwand bzw. zum Zungengrund hin erstreckt.

Der Vorteil eines *vestibulären*/*bukkalen* Verlängerungselements besteht darin, dass damit das Löffelbasiselement auch für Abformungen von unbezahnten Kiefern verwendet werden kann. Unbezahnte Kiefer weisen nicht nur eine leicht andere Form auf als die Löffel für bezahnte Kiefer, sondern sind vor allem an den Rändern erheblich kürzer, weil die entsprechenden Zähne fehlen und dementsprechend weniger Höhe vonnöten ist.

Um hierfür keine "eigenen" Basislöffelvarianten zu benötigen, kann das vestibuläre/bukkale Verlängerungselement eingesetzt werden. Die vorgeschlagene universelle Löffelbasis hat dann einen relativ kurzen Rand, d.h., hiermit können auch zahnlose Kiefer abgeformt werden. Um damit auch (teil-)bezahnte Kiefer (ggf. aber auch zahnlose Kiefer mit einer tiefen Umschlagfalte) abdecken zu können, muss eine Randverlängerung möglich sein. Dazu kann man am unteren Rand Zusatzelemente anfügen, die den Löffel verlängern. Dabei kann nicht nur ein Zusatzelement angebracht werden, sondern so viele wie nötig sind, um ideal abzuformen.

Es kann auch vorgesehen sein, dass ein derartiges Verlängerungsteil im Lieferzustand des Basislöffelteils bereits gesteckt ist und dann nur für Abdrücke von unbezahnten Kieferteilen wieder entfernt zu werden, was ggf. angesichts der größeren Häufigkeit der Abdrucknahme für (teil-)bezahnte Kiefer Arbeitszeit spart.

In einer bevorzugten Ausführungsform können die einzelnen Elemente des Baukastensystems weiterhin an korrespondierenden Stellen Markierungen und/oder Vertiefungen und/oder Sollbruchstellungen aufweisen, die ein Einkürzen des Abformlöffels zur Anpassung an die jeweiligen Kiefergegebenheiten oder zur Schaffung eines Teillöffels ermöglichen oder vereinfachen.

Da eine Bearbeitung des Materials - zumindest im nicht-thermoplastischen Zustand - nicht unbedingt einfach ist, bietet es sich an, dem Behandler durch Vertiefungen bzw. Sollbruchstellen bzw. zumindest Zusatzmarkierungen das Einkürzen des Löffels auf eine richtige Länge zu ermöglichen und/oder zu erleichtern.

Dazu können im hinteren Teil in regelmäßigen Abständen z.B. Vertiefungen vorgesehen sein, die sich sowohl bukkal und okklusal an der Löffelbasis befinden als auch lingual bzw. palatinal an den Zusatzelementen fortführen.

Bedingt durch diese Vertiefungen (Einziehungen) kann der Behandler überflüssige Teile einfacher und genauer abtrennen, da das Material an diesen Stellen dünner ist; sei es mit einer Trennscheibe, einer speziellen Schere, mit einer speziellen Zange od. dgl. D.h., im hinteren Bereich könnte er dann problemlos den Löffel auf die richtige Länge einkürzen.

Die Verwendung von Vertiefungen hat in der weiteren Anwendung keine negativen Folgen, da beim Anpressen des Materials an den Kiefer diese Stellen mit der übrigen Wandstärke weitgehend "verpresst" bzw. egalisiert werden.

Insgesamt ist es im Rahmen der Erfindung bevorzugt so, dass für Anpassungen des Abformlöffels an einen Patientenkiefer, die im Wesentlichen in Richtung einer *Vertikalebene* bezogen auf den Patientenkiefer - erfolgen sollen, also nach oben oder nach unten, *Verlängerungselemente* verwendet werden, wohingegen für Anpassungen an einen Patientenkiefer, die im Wesentlichen in Richtung einer *Sagitalebene* bezogen auf den Patientenkiefer erfolgen sollen, *Einkürzungen* des Abformlöffels bevorzugt werden. Mit diesem Ansatz geht einher, dass ein Basiselement des Abformlöffels hinsichtlich seiner Erstreckung in der Vertikalebene eher kurz ausgestaltet ist (abgesehen von möglicherweise "vormontierten" Verlängerungen), so dass keine Kürzungen, sondern normalerweise nur Verlängerungen erforderlich sind, und umgekehrt hinsichtlich der Erstreckung in einer Sagitalebene insbesondere hinsichtlich der Länge des Löffelbogens) dieser eher "zu lang" gestaltet ist, so dass keine Verlängerungen, sondern normalerweise nur Einkürzungen erforderlich sind.

Erfindungsgemäß wird ferner eine Komponente für einen zahnmedizinischen Abformlöffel vorgeschlagen. Die Komponente ist zur Verwendung für einen zahnmedizinischen Abformlöffel wie vorstehend beschrieben ausgebildet und weist hierzu insbesondere wenigstens ein Verbindungselement auf, das zur selektiven Verbindung mit wenigstens einer anderen Komponente des zahnmedizinischen Abformlöffels ausgebildet ist. Die Verbindung kann auf verschiedenste Arten erfolgen, z.B. über eine Nut- und Federverbindung oder eine andere kraft- oder formschlüssige Verbindung, wie vorstehend beschrieben.

Ferner wird ein Verfahren zur Bereitstellung eines patientenkieferangepassten zahnmedizinischen Abformlöffels, der wenigstens teilweise aus einem thermoplastischen Material besteht, vorgeschlagen, das wenigstens die Schritte aufweist:
a) Konfiguration des Abformlöffels aus wenigstens zwei Komponenten, die Teil eines Baukastensystems für den zahnmedizinischen Abformlöffel sind, entsprechend der Patientenkiefersituation und Verbinden der Komponenten;
b) falls erforderlich, Kürzen von Komponenten;
c) Erwärmen des Abformlöffels; und Anformung, sowie Erkaltung;
d) Bereitstellen des Abformlöffels zur Feinanformung im Patientenkiefer oder zur Feinanformung an ein Kiefermodell in einem zahntechnischen Labor..

Damit kann dann entweder die Feinabformung vorgenommen werden, wie in der PCT-Anmeldung PCT/DE2018/100517 näher erläutert. Alternativ kann dieses Verfahren, wie in Schritt d) angedeutet, auch in einem zahntechnischen Labor zur Herstellung von Abformlöffeln anhand eines Gipsmodells des Patientenkiefers verwendet werden.

Ein wichtiger Vorteil der Erfindung - unabhängig davon, ob mit einem thermoplastischen Material oder ohne gearbeitet wird - liegt darin, dass viele Löffelvarianten überflüssig werden und ein hohes Einsparpotential realisiert werden kann, und gleichzeitig auch eine individuellere Versorgung des Patienten als mit einem konfektionierten Löffel erreicht werden kann.

Mittels der Erfindung kann ferner vermieden werden, dass dem Behandler oder der Stuhlassistenz der richtige Löffel fehlt, oder dass ggf. sogar ein Löffel gewaltsam verbogen werden muss, damit dieser näherungsweise "passt".

Eine genauere Passung des Löffels hat zudem ein besseres Ergebnis bei der Abformung zur Folge.

Zudem nehmen die Zusatzelemente weniger Platz in Anspruch, und der Behandler benötigt nicht die Anzahl an Löffelbasen, die er bei den konventionellen Löffeln benötigt, da die neuen Löffelbasen multifunktional sind.

Die Erfindung wird nachfolgend anhand der in den Zeichnungen dargestellten Ausführungsbeispiele näher erläutert. Es zeigen:
- Figuren 1a,b: schematische Darstellungen eines Ausführungsbeispiels für ein Löffelbasiselement ohne eingesetzte weitere Teile;
- Figur 2: eine schematische Darstellung eines Ausführungsbeispiels eines Unterkiefer-Lingualelements;
- Figur 3: eine schematische Darstellung eines Löffelbasiselements gemäß den Figuren 1a,b mit eingesetztem Unterkiefer-Lingualelement gemäß Figur 2;
- Figuren 4a,b: schematische Darstellungen von Ausführungsbeispielen für ein Oberkiefer-Gaumenelement in zwei Varianten für unterschiedliche Gaumengeometrien;
- Figur 5: eine schematische Darstellung eines Löffelbasiselements gemäß den Figuren 1a,b mit eingesetztem Oberkiefer-Gaumenelement gemäß Figur 4b;
- Figur 6a: ein Ausführungsbeispiel für ein Verlängerungselement für ein Unterkiefer-Lingualelement;
- Figur 6b: eine schematische Darstellung eines Unterkiefer-Lingualelements gemäß den Figur 2 mit angesetztem Verlängerungselement gemäß Figur 6a;
- Figuren 7a,b: schematische Darstellungen von Ausführungsbeispielen für ein Löffelbasiselement mit eingesetztem Oberkiefer-Gaumenelement und endseitigen Vertiefungsrillen/Sollbruchlinien, um ein Einkürzen zur kieferindividuellen Längenanpassung zu vereinfachen;
- Figuren 8a,b: schematische Darstellungen ähnlich Figur 7a,b, bei denen außerdem zusätzliche Vertiefungsrillen/Sollbruchlinien dargestellt sind, anhand derer Teillöffel abgetrennt werden können;
- Figuren 9a-d: Beispiele für die Bildung von Teillöffeln.

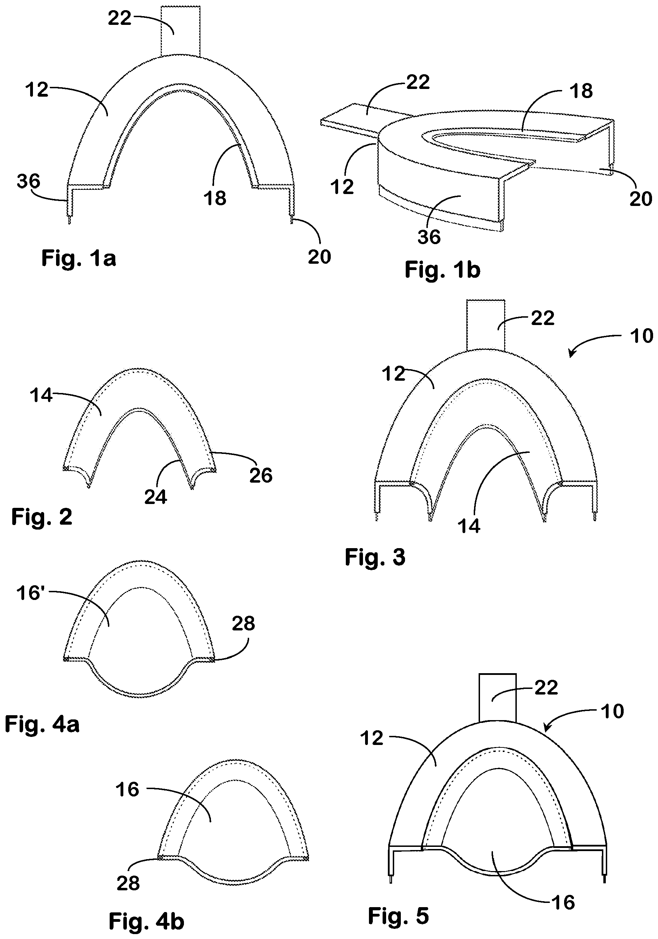

Die Figuren 1a und 1b zeigt in einer schematischen Darstellung ein Ausführungsbeispiel für ein erfindungsgemäßes Löffelbasiselement 12, das universell sowohl für Oberkiefer- als auch für Unterkieferabformungen eingesetzt werden kann.

Wie ersichtlich, ist der "Innenraum" freigehalten und von den ursprünglich bekannten Löffeln nur die bukkale und okklusale Wandung 36 mit einbezogen sowie ein Löffelgriff 22. Auf die "feste" Ausbildung eines lingualen bzw. palatinalen Anteils wird bei dem Basislöffelelement 12 verzichtet.

Stattdessen ist ein Befestigungselement 18 (insbesondere eine Feder einer Nut- und Federverbindung) für den wahlweisen Einsatz verschiedener "Add-ons", nämlich entweder eines Unterkiefer-Lingualelements 14 oder eines Oberkiefer-Gaumenelements 16, 16' ausgebildet.

Ein weiteres Befestigungselement, ebenfalls eine Feder 20 einer Nut- und Federverbindung, ist an der unteren Stirnkante der bukkalen und okklusale Wandung 36 vorgesehen, welches zur Anbringung optionaler Verlängerungselemente dient, wie weiter unten beschrieben werden wird.

Die entsprechenden Einsatzelemente, d.h. das Unterkiefer-Lingualelement 14 bzw. das Oberkiefer-Gaumenelements 16, 16', die für sich genommen in Figur 2 und in den Figuren 4a und 4b gezeigt sind, weisen jeweils korrespondierende Gegen-Befestigungselemente (Nuten 26 bzw. 28) auf und können so passgenau in den freien Innenbogen des Basiselements 12 eingeschoben und damit fixiert werden.

Damit wird dann, wie in Figur 3 (darstellend die Kombination aus Löffelbasiselement 12 und Unterkiefer-Lingualelement 14) und Figur 5 (Kombination Löffelbasiselement 12 und Oberkiefer-Gaumenelement 16) gezeigt, ein insgesamt mit 10 bezeichneter Abformlöffel patientenindividuell vorkonfiguriert.

Durch unterschiedliche Größen des Löffelbasiselements 12 kann der Löffel 10 so nah wie möglich an die Kiefergeometrie des Patienten angepasst werden, was sowohl angenehmer für den Patienten ist als auch für eine bessere Abformung sorgen kann.

Trotz unterschiedlicher Größenvarianten (nicht dargestellt) des Basiselements 12 kann vorgesehen sein, dass der innere Bogen mit der Feder 18 stets gleich geformt ist, so dass jeweils identische Unterkiefer- oder Oberkieferelemente 14, 16 verwendet werden können, was die Zahl zu bevorratender Teile reduziert.

Hinsichtlich der Unterkiefer- oder Oberkieferelemente erweist es sich als zweckmäßig, das Oberkiefer-Gaumenelement in wenigstens zwei geometrischen Varianten 16, 16' bereitzustellen, so dass eine Anpassung an unterschiedliche Gaumenverläufe (flacher/tiefer Gaumen) möglich ist.

Als weiteres Element, mit dem der Löffel 10 modifiziert werden und damit die Vielzahl vorzuhaltender Löffelmodelle reduziert werden kann, können verschiedene Verlängerungselemente vorgesehen sein.

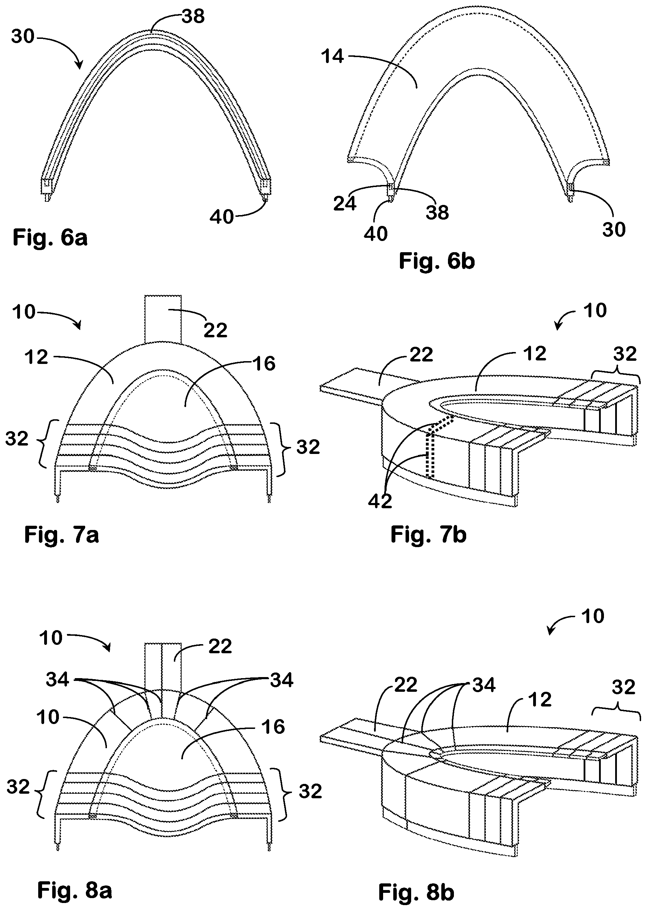

Figur 6a zeigt schematisch und nicht maßstäblich ein Verlängerungselement 30 für das Unterkiefer-Lingualelement 14, mit dessen Feder 24 es über eine Nut 38 verbunden werden kann, so dass das Unterkiefer-Lingualelement 14 weiter auf den Zungengrund reicht. Falls diese Verlängerung nicht ausreicht, kann über eine an dem Verlängerungselement 30 vorgesehene weitere Feder 40 ein weiteres gleichartiges Verlängerungselement 30 angesteckt werden, usw.

Das in Figur 6a dargestellte Verlängerungselement kann in einer etwas anderen geometrischen Ausgestaltung - hier nicht explizit dargestellt - auch zur Verlängerung der bukkalen und okklusalen Wandung 36 des Löffelbasiselements 12 verwendet werden. Hierzu wird ein entsprechendes Element (wie erwähnt nicht explizit dargestellt, aber analog zu Figur 6a) in die Feder 20 des Löffelbasiselements 12 eingesteckt. Diese Verlängerung ermöglicht - wie schon erwähnt - eine Verwendung des Löffelbasiselements 12 sowohl für unbezahnte und bezahnte Kiefer, indem die zahnhöhenbedingte Differenz durch entsprechende Verlängerungselemente ausgeglichen wird.

Das bis zu diesem Punkt erläuterte Prinzip ist grundsätzlich für alle gängigen Materialien möglich. Schon hierdurch kann erreicht werden, dass viele Löffelvarianten überflüssig werden und ein hohes Einsparpotential realisiert wird, womit gleichzeitig auch eine individuellere Versorgung des Patienten als mit einem konfektionierten Löffel erreicht werden kann.

Damit kann vermieden werden, dass dem Behandler oder der Stuhlassistenz der richtige Löffel fehlt, oder dass man ggf. sogar einen Löffel gewaltsam verbiegen muss, damit dieser einigermaßen passt. Eine genauere Passung des Löffels hat zudem ein besseres Ergebnis bei der Abformung zur Folge. Zudem nehmen die Zusatzelemente weniger Platz in Anspruch und der Behandler benötigt nicht die Anzahl an Löffelbasen, die er bei den ursprünglichen Löffeln benötigt, da die erfindungsgemäßen Löffelbasen multifunktional sind.

In Zusammenhang mit einer *thermoplastischen Ausbildung* des Löffels, wie sie weiter oben bzw. in der erwähnten PCT-Anmeldung beschrieben ist, stehen noch weitere Möglichkeiten zur Verfügung, dieses Konzept effektiver umzusetzen.

Zudem sind bei einer thermoplastischen Ausbildung noch einige spezielle Zusatzaspekte zu beachten, insbesondere die Verwendung einer Folie sowie die Verwendung von Einkerbungen/Trennrillen/Trennlinien/Trennmarkierungen.

Mit einem thermoplastischen Material kann eine weitere Reduktion der vorzuhaltenden Varianten erzielt werden. Bei beispielsweise "konventionell" vier verschiedenen Löffelgrößen können nun drei Löffelgrößen weggelassen werden, und zwar aufgrund der Materialeigenschaften im erhitzten Zustand.

Wenn konventionell Löffelgröße "1" die kleinste und Löffelgröße "4" die größte Variante darstellt, kann ein Basislöffel aus einem thermoplastischen Material beispielsweise die Löffelgröße "3" aufweisen. Die Löffelgrößen "1" und "2" sind dann entbehrlich, weil die Löffelgröße "3" so angeformt werden kann, dass diese den Löffelgrößen "1" und "2" gerecht wird.

Entsprechend kann Löffelgröße "4" entfallen, da Löffelgröße "3" im erhitzen Zustand zu Löffelgröße "4" geweitet werden kann.

D.h., wenn vorher (in der oben beschriebenen Ausführung bei herkömmlichen Materialien) noch mindestens vier Löffelgrößen pro Kiefer benötigt wurden, ist es jetzt nur noch eine zzgl. Zusatzkomponenten für beide Kiefer.

Außerdem stellt diese Form des Löffels vorzugsweise ein Einmalteil dar, dessen Kosten der Behandler auf den Patienten umlegen könnte. Zudem muss dadurch kein einziger Löffel mehr gereinigt und sterilisiert oder nachbestellt werden (Hygienevorteil).

Weiterhin besteht die Möglichkeit, das Produkt leicht zu recyclen, so dass Ressourcen geschont werden. Alternativ ist es auch möglich, ein Thermoplast zu verwenden, das biologisch abbaubar ist.

Auch bei dieser Variante ist es ratsam, an der Löffelbasiselement 12 eine Folie als Abstandshalter anzubringen (in den Zeichnungen nicht dargestellt), wie vorstehend bzw. in der o.g. unveröffentlichten PCT-Anmeldung beschrieben. Dementsprechend sollten auch die Zusatzelemente 14, 16 und ggf. 30 dann die entsprechende Folie enthalten, sofern nicht die Folie des Basiselements 12 mit so großen Überstand ausgebildet ist, dass diese auch die Zusatzteile erfasst.

Der Behandler hat so die Möglichkeit, wie bereits in der o.g. Anmeldung beschrieben, unmittelbar einen individuellen Löffel/Funktionslöffel herzustellen, was sonst nur im Labor möglich ist, und dementsprechend ideale Voraussetzungen für eine Abformung zu schaffen und die Zahl der erforderlichen Patientensitzungen deutlich zu reduzieren.

Damit ist es denkbar, dass das beschriebene Abformsystem hinsichtlich Qualität und Wirtschaftlichkeit aufgrund der Erhöhung der "Chairside"-Anteile der Prozesse, der Reduzierung der Zahl der erforderlichen Behandlungssitzungen, der Reduzierung von Botenfahrten und insgesamt der Reduzierung von Prozessschritten und der damit einhergehenden Eliminierung möglicher Fehlerquellen ein effektiveres Arbeiten ermöglicht und damit neue Standards setzt.

Der vorbeschriebene Löffel kann auch zur Herstellung von individuellen Löffeln und Funktionslöffeln im Labor verwendet werden; d.h., der Techniker individualisiert den Löffel vor (ggf. durch Abtrennen oder Anstecken von Materialkomponenten), erhitzt ihn und formt ihn an ein Gipsmodell eines Patientenkiefers an, das er zuvor erstellt hat. Diese Löffel können dann wiederum vom Behandler zur Gewinnung von Feinabformungen verwendet werden.

Vorzugsweise sollte das Löffelbasiselement 12 nach hinten/distal relativ lang sein (extendiert sein), so dass man nahezu jede Patientensituation durch Vornahme von Einkürzungen handhaben kann, wie nachfolgend näher beschrieben:
Da die Bearbeitung des Materials nicht generell einfach ist, bietet es sich an, dem Behandler durch ein "Zusatzelement"/ oder einige "Zusatzmarkierungen" das Einkürzen des Löffels auf die richtige Länge zu erleichtern.

Dazu sind, wie in den Figuren 7a,b und 8a,b vorzugsweise im hinteren Teil in regelmäßigen Abständen z.B. Vertiefungen/Rillen 32 vorgesehen, die sich sowohl bukkal und okklusal an der Löffelbasis 32 befinden, als auch lingual bzw. palatinal an den Zusatzelementen fortführen. In den Figuren ist in Figur 7a bzw. 8a jeweils die Kombination Löffelbasiselement 12 und Oberkiefer-Gaumenelement 16 dargestellt und in den Figuren 7b und 8a nur das Löffelbasiselement 12.

Bedingt durch diese "Vertiefungen" (Einziehungen) / Rillen 32 kann der Behandler überflüssige Teile einfacher und genauer abtrennen, da das Material an diesen Stellen dünner ist. Das Abtrennen kann mit einer Trennscheibe, einer speziellen Schere, mit einer speziellen Zange, "abknipsen" oder auf ähnliche Weise erfolgen. D.h. im hinteren Bereich kann er dann problemlos den Löffel auf die richtige Länge einkürzen. Die Verwendung von Vertiefungen hat im weiteren Verlauf keine negativen Folgen, da beim Anpressen des Materials an den Kiefer diese Stellen mit der übrigen Wandstärke "verpresst" werden.

Die Rillen 32 können eine Tiefe von ca. 5%-90%, vorzugsweise ca. 30% der Gesamtmaterialstärke aufweisen. In Figur 7b ist bei 42 auch noch durch gepunktete Linien angedeutet, dass anstelle von Rillen auch komplette Ausnehmungen/Spalte (in Figur 7b übertrieben breit dargestellt) vorgesehen sein können, die sich dann aber vorzugsweise nur über einen Teilbereich des Querschnitts erstrecken. Dies erlaubt ggf. ein Abbrechen der entsprechenden Teile "von Hand" oder ggf. unter Zuhilfenahme entsprechend angepasster Werkzeuge, die in die Ausnehmungen eingreifen. Alternativ sind auch *perforationsartige* Sollbruchstellen denkbar.

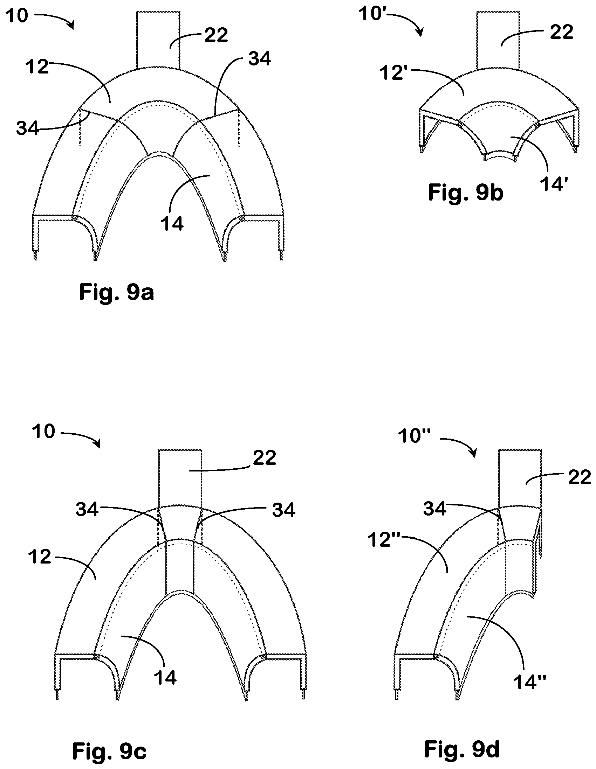

Zudem kann man solche Vertiefungen (und in gewisser Weise Führungslinien) auch noch anderweitig nutzen, um dem Behandler genaue Markierungen zur Erstellung eines Teillöffels bereitzustellen. Die entsprechenden "Sollbruchstellen" werden durch die Rillen/Vertiefungen 34 gemäß Figur 8a,b markiert bzw. vorgegeben. So kann der Behandler aus einem "ganzen Löffel" in kürzester Zeit einen Teillöffel erstellen, wie aus den Figuren 9a-d ersichtlich ist.

Dabei illustrieren die Figuren 9a und 9b die Erstellung Teillöffels 10' (mit entsprechend gekürzten Elementen 12', 14') für eine Abdrucknahme im Frontzahnbereich.

Die Figuren 9c und 9d illustrieren eine Teillöffelerstellung für Abdrucknahme im Seitenzahnbereich für die Quadranten 1 und 3 (Löffel 10", bestehend aus den Komponenten 12", 14"). Würde man die andere Seite abtrennen, erhielt man einen Teillöffel für die Quadranten 2 und 4.

Alternativ wäre es auch möglich, komplette Freistellen ("Einkerbungen") in den Löffel 10 zu integrieren, d.h., dass das in den Löffel entsprechende Spalten integriert sind, wobei die mechanische Integrität des Löffels nur durch verbundene Bereiche seitlich der Spalte gewährleistet wird. In diesem Falle könnte man die zu entfernenden Bereiche einfach wegbrechen. Die Spalte würden dann im erhitzten Zustand beim Anpressen des Hauptkörpers verschwinden.

In einer alternativen Ausführungsform könnte man sich auch auf farbliche Markierungen beschränken, um dem Behandler ausschließlich eine Trennhilfe zur Verfügung zu stellen.

### Mögliches Umsetzungsbeispiel für ein Baukastensystem für einen thermoplastischen Abformlöffel:

In einem Beispiel reichen insgesamt sechs Elemente für jeden Patienten und jede Abformungsvariante aus (mukodynamisch oder mucostatisch):
- Die entwickelte Löffelbasis in Größe 3 (=1 Teil)
- vestibuläres/bukkales Verlängerungselement (=1 Teil)
- Oberkiefer-Gaumenelement in zwei Varianten (=2 Teile)
- Unterkiefer-Lingualelement (=1 Teil)
- Verlängerungselement lingual (=1 Teil)

Alle Elemente sind idealerweise gemäß der PCT/DE2018/100517 mit einer Folie als Abstandshalter versehen.

### Vorgehen am Stuhl (nicht-thermoplastische Materialien):

- Behandler sucht richtige Größe des Basislöffels aus;
- Nun befestigt er das nötige Zusatzelement zur Unterscheidung von Oberkiefer und Unterkiefer;
- Überprüfung der Randlänge - ggf. Löffelverlängerung mit Zusatzelementen vornehmen;
- Erneute Überprüfung des erstellten Löffels im Mund des Patienten;
- Wenn alles in Ordnung - ABFORMUNG.

### Vorgehen am Stuhl (thermoplastische Materialien)

- Der Behandler sucht richtige Größe des Basislöffels aus;
- Nun befestigt der Behandler das nötige Zusatzelement zur Unterscheidung von Oberkiefer und Unterkiefer;
- Überprüfung der Randlänge - ggf. Löffelverlängerung mit Zusatzelementen vornehmen;
- Ist der Löffel nach distal zu lang, kann der Behandler den erstellten Löffel mit Hilfe der Vertiefungen/Einkerbungen/Spalte/Markierungen schnell einkürzen bzw., wenn erwünscht, den Löffel zu einem Teillöffel umgestalten;
- Nun wird der Löffel erhitzt und es geht weiter wie in der PCT/DE2018/100517 beschrieben, d.h.:
- Anformung des erhitzten Löffels im Mund des Patienten, wobei die Abstandsfolie den Raum für das spätere Feinabformung definiert und freihält und "Stopps" (diese bilden sich entweder bei der Anformung aus oder sind bereits vorgeformt) die definierte Lage des Abformlöffels im Kiefer auch nach späterer Entfernung der Abstandsfolie gewährleisten, dabei werden auch in der Regel die einzelnen Komponenten des Baukastensystems inniger miteinander verbunden, so dass sie sich nicht mehr ohne Weiteres lösen lassen, und nicht benötigte Rillen/Spalte werden mehr oder weniger egalisiert;
- Entnehmen des Löffels und Entfernen der Abstandsschicht;
- optional Einbringen eines Haftvermittlers;
- Einbringen eines dünnflüssigen Abdruckmaterials für die Feinabformung, und
- Vornahme der Feinabformung im Patientenmund.

## Patentansprüche

1. Zahnmedizinischer Abformlöffel (10),
wobei
der Abformlöffel (10) in einem Baukastensystem aus mehreren miteinander verbindbaren Teilen oder Komponenten (10, 12, 14, 30) zusammensetzbar und damit individuell an die Patientenkiefersituation anpassbar ist, und
wobei der Abformlöffel (10) bezüglich aller oder einzelner Komponenten im Wesentlichen aus einem thermoplastischen Material hergestellt ist, das im erwärmten Zustand eine Anformung des Abformlöffels (10) im Mund eines Patienten ermöglicht, wobei
der Abformlöffel (10) einen Basislöffel (12) aufweist, der für Unter- und Oberkiefer gleichermaßen einsetzbar ist, der jeweils durch verbindbare Zusatzteile (14, 16) ergänzt und/oder angepasst werden kann.

2. Zahnmedizinischer Abformlöffel nach Anspruch 1,
**dadurch gekennzeichnet, dass**
die Materialstärke des thermoplastischen Materials derart minimiert ist,
dass Anpassungen an bestimmte Patientenkiefersituation nicht durch bloße Anformung des thermoplastischen Materials, sondern nur durch Einsatz von Zusatzteilen erzielt werden können.

3. Zahnmedizinischer Abformlöffel (10) nach einem der Ansprüche 1 bis 2, **dadurch gekennzeichnet, dass**
der Abformlöffel (10) wenigstens in Teilbereichen, in denen eine Feinabformung erfolgen soll, eine Abstandsschicht mit einer vorgegebenen Stärke aufweist, wobei die Abstandsschicht nach dem Anformungsvorgang ganz oder teil- weise entfernbar ist.

4. Zahnmedizinischer Abformlöffel (10) nach einem der Ansprüche 1 bis 3, **dadurch gekennzeichnet, dass**
die einzelnen Komponenten wenigstens ein Verbindungsmittel (18, 20, 24, 26, 28, 38, 40) zur selektiven Verbindung mit wenigstens einer anderen Komponente aufweisen.

5. Zahnmedizinischer Abformlöffel (10) nach Anspruch 4,
**dadurch gekennzeichnet, dass**
das wenigstens eine Verbindungsmittel (18, 20, 24, 26, 28, 38, 40) als Nut- und Federverbindung oder als eine andere lösbare form- und/oder kraftschlüssige Verbindung ausgebildet ist.

6. Baukastensystem zur Herstellung eines zahnmedizinischen Abformlöffels (10) nach einem der Ansprüche 1 bis 5,
wobei
das Baukastensystem wenigstens folgende Komponenten aufweist:
- wenigstens ein sowohl für Oberkiefer- als auch Unterkieferabdrücke geeignetes Löffelbasiselement (12) in ein oder mehreren Größen;
- wenigstens ein mit dem Löffelbasiselement (12) verbindbares Oberkiefer-Gaumenelement (16, 16'), jeweils angepasst an die Größe oder die mehreren Größen des Löffelbasiselements (12) und/oder in einer Variante oder in mehreren Varianten hinsichtlich der Geometrie der Auswölbung des Gaumendachs; und
- wenigstens ein mit dem Löffelbasiselement (12) verbindbares Unterkiefer-Lingualelement (14), jeweils angepasst an die Größe oder die mehreren Größen des Löffelbasiselements (12),
wobei alle oder einzelne Komponenten im Wesentlichen aus einem thermoplastischen Material hergestellt sind, das im erwärmten Zustand eine Anformung des Abformlöffels im Mund eines Patienten ermöglicht.

7. Baukastensystem nach Anspruch 6,
**dadurch gekennzeichnet, dass**
das Baukastensystem ferner ein oder mehrere der folgenden Komponenten aufweist:
- wenigstens ein vestibuläres/bukkales Verlängerungselement, jeweils angepasst an die Größe oder die mehreren Größen des Löffelbasiselements (12); und/oder
- wenigstens ein linguales Verlängerungselement (30), jeweils angepasst an die Größe oder die mehreren Größen des Unterkiefer-Lingualelements (16, 16').

8. Baukastensystem nach Anspruch 6,
**dadurch gekennzeichnet, dass**
die Verlängerungselemente (30) dahingehend ausgebildet sind, mehrfach hintereinander zur Erzielung größerer Verlängerungen eingesetzt zu werden.

9. Baukastensystem nach einem der Ansprüche 1 bis 8,
**dadurch gekennzeichnet, dass**
die einzelnen Elemente des Baukastensystems an korrespondierenden Stellen Markierungen und/oder Vertiefungen und/oder Sollbruchstellungen (32, 34) aufweisen, die ein Einkürzen des Abformlöffels (10) zur Anpassung an die jeweiligen Kiefergegebenheiten oder zur Schaffung eines Teillöffels (10', 10") ermöglichen und/oder vereinfachen.

10. Baukastensystem nach einem der Ansprüche 1 bis 9,
**dadurch gekennzeichnet, dass**
für Anpassungen an einen Patientenkiefer, die im Wesentlichen in Richtung einer Vertikalebene bezogen auf den Patientenkiefer erfolgen sollen, Verlängerungselemente (30) vorgesehen sind, und
dass für Anpassungen an einen Patientenkiefer, die im Wesentlichen in Richtung einer Sagitalebene bezogen auf den Patientenkiefer erfolgen sollen, Einkürzungen des Abformlöffels (10) nach dorsal vorgesehen sind.

11. Komponente (12, 14, 16, 30) für einen zahnmedizinischen Abformlöffel (10),
wobei,
die Komponente (12, 14, 16, 30) zur Herstellung eines zahnmedizinischen Abformlöffels (10) nach einem der Ansprüche 1 bis 5 ausgebildet ist und hierzu wenigstens ein Verbindungselement (18, 20, 24 26, 28, 38, 40) aufweist, wobei, die Komponente im Wesentlichen aus einem thermoplastischen Material hergestellt ist, das im erwärmten Zustand eine Anformung des Abformlöffels (10) im Mund eines Patienten ermöglicht, wobei das Verbindungselement (18, 20, 24, 26, 28, 38, 40) zur selektiven Verbindung mit wenigstens einer anderen Komponente des zahnmedizinischen Abformlöffels (10) ausgebildet ist.

12. Verfahren zur Bereitstellung eines patientenkieferangepassten zahnmedizinischen Abformlöffels (10), der wenigstens teilweise aus einem thermoplastischen Material besteht, das im erwärmten Zustand eine Anformung des Abformlöffels (10) im Mund eines Patienten ermöglicht,
wobei das Verfahren die folgenden Schritte umfasst:
a) Konfiguration des Abformlöffels (10) aus wenigstens zwei Komponenten (12, 14, 16, 30) nach Anspruch 11, die Teil des Baukastensystems nach Anspruch 6 sind, entsprechend der Patientenkiefersituation und Verbinden der Komponenten;
b) falls erforderlich, Kürzen von Komponenten (12, 14, 16, 30);
c) Erwärmen des Abformlöffels (10); und Anformung, sowie Erkaltung;
d) Bereitstellen des Abformlöffels (10) zur Feinanformung im Patientenkiefer oder zur Feinanformung an ein Kiefermodell in einem zahntechnischen Labor.

## Claims

1. Dental impression tray (10), wherein
the impression tray (10) can be assembled in a modular system from a plurality of parts or components (10, 12, 14, 30) that can be connected to one another and can therefore be individually adapted to the patient's jaw situation, and
wherein the impression tray (10) is essentially made of a thermoplastic material with respect to all or individual components , which allows the impression tray (10) to be shaped in the mouth of a patient when heated, wherein
the impression tray (10) has a base tray (12) which can be used equally for the lower and upper jaw and which can be supplemented and/or adapted in each case by connectable additional parts (14, 16).

2. Dental impression tray according to claim 1,
**characterized in that**
the material thickness of the thermoplastic material is minimized in such a way that adjustments to specific patient jaw situations cannot be achieved by merely molding the thermoplastic material, but only by using additional parts.

3. Dental impression tray (10) according to any one of claims 1 to 2,
**characterized in that**
the impression tray (10) has a spacer layer with a predetermined thickness at least in partial areas in which a fine impression is to be taken, the spacer layer being completely or partially removable after the molding process.

4. Dental impression tray (10) according to one of claims 1 to 3,
**characterized in that**
the individual components have at least one connecting means (18, 20, 24, 26, 28, 38, 40) for selective connection with at least one other component.

5. Dental impression tray (10) after claim 4,
**characterized in that**
the at least one connecting means (18, 20, 24, 26, 28, 38, 40) is designed as a tongue and groove connection or as another detachable positive and/or non-positive connection.

6. Modular system for the production of a dental impression tray (10) according to any one of claims 1 to 5, wherein
the modular system has at least the following components:
- at least one tray base element (12) suitable for both upper and lower jaw impressions in one or more sizes;
- At least one upper jaw palatal element (16, 16') that can be connected to the spoon base element (12), each adapted to the size or the plurality of sizes of the tray base element (12) and/or in one or more variants with respect to the geometry of the bulge of the roof of the mouth; and
- At least one with the spoon base element (12) connectable mandibular lingual element (14), each adapted to the size or the multiple sizes of the tray base element (12),
wherein all or individual components are essentially made of a thermoplastic material which, when heated, enables the impression tray to be shaped in the mouth of a patient.

7. Modular system according to claim 6,
**characterized in that**
the modular system also has one or more of the following components:
- At least one vestibular/buccal extension element, each adapted to the size or the several sizes of the spoon base element (12); and or
- at least one lingual extension element (30), each adapted to the size or the several sizes of the mandibular lingual element (16, 16').

8. Modular system according to claim 6,
**characterized in that**
the extension elements (30) are designed to be used several times in a row to achieve greater extensions.

9. Modular system according to one of claims 1 to 8,
**characterized in that**
the individual elements of the modular system have markings and/or indentations and/or predetermined breaking points (32, 34) at corresponding points, which allow the impression tray (10) to be shortened to adapt to the respective jaw conditions or to create a partial tray (10', 10") enable and/or simplify.

10. Modular system according to one of claims 1 to 9,
**characterized in that**
extension elements (30) are provided for adjustments to a patient's jaw, which are to be made essentially in the direction of a vertical plane in relation to the patient's jaw, and
that for adjustments to a patient's jaw, which are to be made essentially in the direction of a sagittal plane in relation to the patient's jaw, the impression tray (10) is shortened dorsally.

11. Component (12, 14, 16, 30) for a dental impression tray (10), wherein
the component (12, 14, 16, 30) for producing a dental impression tray (10) is designed according to one of claims 1 to 5 and has at least one connecting element (18, 20, 24, 26, 28, 38, 40) for this purpose, wherein the components are essentially made of a thermoplastic material which, when heated, enables the impression tray to be shaped in the mouth of a patient,
wherein the connecting element (18, 20, 24, 26, 28, 38, 40) is designed for selective connection with at least one other component of the dental impression tray (10).

12. A method for providing a patient's jaw-adapted dental impression tray (10), which consists at least partially of a thermoplastic material, the method comprising the following steps:
a) configuration of the impression tray (10) from at least two components (12, 14, 16, 30) according to claim 11, which are part of the modular system according to claim 6, corresponding to the patient's jaw situation and connecting the components;
b) if necessary, shortening of components (12, 14, 16, 30);
c) heating the impression tray (10); and molding, as well as cold;
d) providing the impression tray (10) for fine shaping in the patient's jaw or for fine shaping on a jaw model in a dental laboratory.

## Revendications

1. Porte-empreinte dentaire (10), dans lequel
le porte-empreinte (10) peut être assemblé dans un système modulaire à partir de plusieurs pièces ou composants (10, 12, 14, 30) qui peuvent être reliés les uns aux autres et peuvent donc être adaptés individuellement à la situation de la mâchoire du patient, et
dans lequel le porte-empreinte (10) est essentiellement constitué d'un matériau thermoplastique par rapport à tous les composants ou à des composants individuels , ce qui permet au porte-empreinte (10) d'être façonné dans la bouche d'un patient lorsqu'il est chauffé, dans lequel
le porte-empreinte (10) présente un porte-empreinte (12) qui peut être utilisé indifféremment pour la mâchoire inférieure et supérieure et qui peut être complété et/ou adapté dans chaque cas par des pièces supplémentaires pouvant être reliées (14, 16).

2. Porte-empreinte dentaire selon la revendication 1,
**caractérisé en ce que**
l'épaisseur de matériau du matériau thermoplastique est minimisée de telle manière que des ajustements aux situations spécifiques de la mâchoire du patient ne peuvent pas être obtenus en moulant simplement le matériau thermoplastique, mais uniquement en utilisant des pièces supplémentaires.

3. Porte-empreinte dentaire (10) selon l'une quelconque des revendications 1 à 2,
**caractérisé en ce que**
le porte-empreinte (10) présente une couche d'espacement d'une épaisseur prédéterminée au moins dans des zones partielles dans lesquelles une empreinte fine doit être prise, la couche d'espacement étant complètement ou partiellement amovible après le processus de moulage.

4. Porte-empreinte dentaire (10) selon l'une des revendications 1 à 3,
**caractérisé en ce que**
les composants individuels présentent au moins un moyen de connexion (18, 20, 24, 26, 28, 38, 40) pour une connexion sélective avec au moins un autre composant.

5. Porte-empreinte dentaire (10) après revendication 4,
**caractérisé en ce que**
le au moins un moyen de liaison (18, 20, 24, 26, 28, 38, 40) est conçu comme une liaison à rainure et languette ou comme une autre liaison positive et/ou non positive amovible.

6. Système modulaire pour la réalisation d'un porte-empreinte dentaire (10) selon l'une quelconque des revendications 1 à 5, dans lequel
le système modulaire a au moins les composants suivants :
- au moins un élément de base de plateau (12) adapté à la fois aux empreintes de la mâchoire supérieure et inférieure dans une ou plusieurs tailles ;
- au moins un élément palatin de mâchoire supérieure (16, 16') pouvant être relié à l'élément de base de cuillère (12), chacun adapté à la taille ou la pluralité de tailles de l'élément de fond de plateau (12) et/ou en une ou plusieurs variantes par rapport à la géométrie du renflement du toit de la bouche ; et
- au moins un avec l'élément de base de cuillère (12) connectable élément lingual mandibulaire (14), chacun adapté à la taille ou aux multiples tailles de l'élément de base de plateau (12),
dans lequel tous les composants ou des composants individuels sont essentiellement constitués d'un matériau thermoplastique qui, lorsqu'il est chauffé, permet au porte-empreinte d'être façonné dans la bouche d'un patient.

7. Système modulaire selon la revendication 6,
**caractérisé en ce que**
le système modulaire comporte également un ou plusieurs des composants suivants :
- au moins un élément d'extension vestibulaire/buccale, chacun adapté à la taille ou aux plusieurs tailles de l' élément de base en cuillère (12) ; et ou
- au moins un élément d'extension linguale (30), chacun adapté à la taille ou aux plusieurs tailles de l'élément lingual mandibulaire (16, 16').

8. Système modulaire selon la revendication 6,
**caractérisé en ce que**
les éléments d'extension (30) sont conçus pour être utilisés plusieurs fois de suite pour obtenir des extensions plus importantes.

9. Système modulaire selon l'une des revendications 1 à 8,
**caractérisé en ce que**
les éléments individuels du système modulaire présentent des marquages et/ou des indentations et/ou des points de rupture prédéterminés (32, 34) à des points correspondants, qui permettent de raccourcir le porte-empreinte (10) pour s'adapter aux conditions respectives de la mâchoire ou pour créer un plateau partiel (10', 10" ) activer et/ou simplifier.

10. Système modulaire selon l'une des revendications 1 à 9,
**caractérisé en ce que**
des éléments d'extension (30) sont prévus pour des ajustements à la mâchoire d'un patient, qui doivent être effectués essentiellement dans la direction d'un plan vertical par rapport à la mâchoire du patient, et
que pour des ajustements à la mâchoire d'un patient, qui doivent être effectués essentiellement dans la direction d'un plan sagittal par rapport à la mâchoire du patient, le porte-empreinte (10) est raccourci dorsalement.

11. Composant (12, 14, 16, 30) pour un porte-empreinte dentaire (10), dans lequel
le composant (12, 14, 16, 30) pour la fabrication d'un porte-empreinte dentaire (10) est réalisé selon l'une des revendications 1 à 5 et présente au moins un élément de liaison (18, 20, 24, 26, 28, 38, 40) à cet effet, dans lequel les composants sont essentiellement constitués d'un matériau thermoplastique qui, lorsqu'il est chauffé, permet de mettre en forme le porte-empreinte dans la bouche d'un patient,
dans lequel l'élément de liaison (18, 20, 24, 26, 28, 38, 40) est conçu pour une liaison sélective avec au moins un autre composant du porte-empreinte dentaire (10).

12. Procédé pour fournir un porte-empreinte dentaire (10) adapté à la mâchoire d'un patient, qui se compose au moins partiellement d'un matériau thermoplastique, le procédé comprenant les étapes suivantes :
a) configuration du porte-empreinte (10) à partir d'au moins deux composants (12, 14, 16, 30) selon la revendication 11, qui font partie du système modulaire selon la revendication 6, correspondant à la situation de la mâchoire du patient et reliant le Composants;
b) si nécessaire, raccourcissement des composants (12, 14, 16, 30) ;
c) chauffer le porte-empreinte (10); et moulage, ainsi que froid;
d) fournir le porte-empreinte (10) pour une mise en forme fine dans la mâchoire du patient ou pour une mise en forme fine sur un modèle de mâchoire dans un laboratoire dentaire.
